# EUROPÄISCHE PATENTSCHRIFT

(11) **EP 1 209 045 B1**
(45) Veröffentlichungstag und Bekanntmachung des Hinweises auf die Patenterteilung: **22.09.2004**
(21) Anmeldenummer: 01127429.7
(22) Anmeldetag: 26.11.2001
(51) Int. Cl.: B60R 21/26

(54) **Pyrotechnischer Gasgenerator**
Pyrotechnic gas generator
Générateur de gaz pyrotechnique

(30) Priorität: 27.11.2000 DE 20020103 U
(43) Veröffentlichungstag der Anmeldung: 29.05.2002
(73) Patentinhaber: TRW Airbag Systems GmbH, 84544 Aschau am Inn (DE)
(72) Erfinder: Werneth, Josef, 84539 Ampfing (DE); Laucht, Horst, Dr., 83052 Bruckmühl (DE)
(74) Vertreter: Kitzhofer, Thomas, Dipl.-Ing.

(56) Entgegenhaltungen:
- US-A- 3 990 367
- US-A- 4 959 011
- US-A- 5 142 982
- US-A- 6 012 737
- US-A- 6 089 597

## Beschreibung

Die Erfindung betrifft einen pyrotechnischen Gasgenerator, mit einem Generatoraußengehäuse, in dem ein pyrotechnischer Treibsatz und ein Zünder untergebracht sind, wobei der Zünder ein ein pyrotechnisches Material enthaltendes, in sich geschlossenes, eigenes Zündergehäuse hat, das am Generatoraußengehäuse befestigt ist, und wobei das Zündergehäuse ein Sockelteil und ein daran befestigtes, hutförmiges Aufnahmeteil hat.

Ein derartiger Gasgenerator ist beispielsweise aus der US 5 957 492 bekannt. Der als separater, als vormontierte Einheit ausgebildete Zünder wird mit seinem Außengehäuse in eine Öffnung in einen Deckel des Generatoraußengehäuses eingesetzt und vorzugsweise mittels einer Laser-Schweißung am Deckel befestigt. Die Laser-Schweißung ist als Prozeß aber sehr teuer und gelingt nur, wenn sehr geringe Bauteiltoleranzen eingehalten werden. Ein weiterer Nachteil der vorgesehenen Laser-Schweißung besteht darin, daß die sogenannte Glas-Metall-Durchführung, nämlich die Durchführung von elektrischen Anschlüssen durch das Zündergehäuse durch Öffnungen im Zündergehäuse, die mit Glas ausgegossen sind, durch die Laser-Schweißung thermisch stark belastet wird.

Die gattungsgemäße US 3 990 367 beschreibt eine Art Zündschnur, die an einem Ende verdickt ist, um eine Boosterladung unterzubringen.

Ähnliche Nachteile weist auch die Lösung in der DE 196 01 448 A1 auf, bei der aber der Zünder nicht als separates Teil mit in sich geschlossenem, gasdichtem und feuchtedichtem Gehäuse ausgebildet ist, sondern bei dem zwei topfförmige Gehäuseteile ineinandergesteckt werden und am selben Sockel angeschweißt sind. Das äußere Gehäuse ist ein Teil des Brennkammergehäuses und das innere Gehäuse ein Teil des Zündergehäuses. Die Fertigung dieses Gasgenerators ist aufwendig, da der Zünder nicht separat transportfähig ist, sondern das pyrotechnische Material samt Anschlußleitungen erst bei der Fertigung des gesamten Gasgenerators in die entsprechenden Aufnahmebehälter gefüllt wird. Der Zünder kann somit auch nicht als Zulieferteil ausgeführt sein.

Die DE 195 33 606 A1 zeigt einen Gasgenerator, bei dem das Sockelteil einen radialen Flansch aufweist, der am Generatoraußengehäuse festgeschweißt ist. Das Sockelteil hat einen zylindrischen Abschnitt, über den ein Aufnahmeteil gestülpt und an ihm befestigt ist. Bei diesem Gasgenerator muß das Sockelteil an den verschiedenen Abschnitten exakt bearbeitet sein, um eine gasdichte Verschweißung zu erlauben. Die Verschweißung im Bereich des zylindrischen Abschnitts ist darüber hinaus nahe an der Durchführung für die elektrischen Anschlüsse vorgesehen, so daß die thermische Belastung des Materials der Durchführung durch die Schweißung hoch ist.

Die Erfindung schafft einen Gasgenerator, der einfach gefertigt werden kann und bei dem die thermische Belastung des gesamten Zünders beim Anschweißen an das Generatoraußengehäuse verringert wird. Dies wird bei einem pyrotechnischen Gasgenerator der eingangs genannten Art dadurch erreicht, daß das Aufnahmeteil einen radialen Flansch mit einem Außenrand aufweist, wobei der Außenrand gegenüber dem Sockelteil radial vorsteht und der am Generatorgehäuse angeschweißt ist, und daß der Flansch am Sockelteil angeschweißt ist.

Beim erfindungsgemäßen Gasgenerator hat das Aufnahmeteil einen Flansch, der radial vorsteht und damit wie eine wärmeabgebende Rippe wirkt, wodurch die thermische Belastung im Bereich des Sockelteils reduziert wird. Der Flansch wird einerseits am Sockelteil angeschweißt und andererseits, im Bereich seines Außenrandes, am Generatorgehäuse. Somit ist nur im Bereich des Flansches eine exakte Bearbeitung für vorzunehmende Schweißungen notwendig und nicht an mehreren Abschnitten des Zündergehäuses. Das Aufnahmeteil dient damit nicht nur der Unterbringung des pyrotechnischen Materials für den Zünder, sondern auch der Abdichtung des Generatoraußengehäuses, denn der Zünder wird üblicherweise in eine Öffnung im Generatoraußengehäuse eingesetzt.

Die bevorzugte Ausführungsform sieht vor, daß das Sockelteil einen radial vorstehenden Gegenflansch aufweist, an dem der Flansch des Aufnahmeteils anliegt. Flansch und Gegenflansch bilden damit eine umlaufende, radial vorstehende, wärmeableitende Rippe, die bei Kontakt mit dem Generatoraußengehäuse eine große Fläche für einen direkten Wärmeübergang beim Schweißen auf das Generatoraußengehäuse zur Verfügung stellt.

Vorzugsweise ist die Verschweißung am Außenrand des Gasgenerators gasdicht und feuchtedicht, so daß keine zusätzlichen Dichtungen im Bereich des Zünders zum Verschließen der Öffnung im Generatoraußengehäuse vorgesehen sind.

Die Verschweißung von Außenrand mit dem Generatoraußengehäuse erfolgt vorzugsweise durch Kondensatorentladungsschweißen, einem Schweißvorgang, bei dem üblicherweise die beiden aneinander anzuschweißenden Teile auch fest aneinandergepreßt werden. Durch das Vorsehen des Flansches und vorzugsweise des Gegenflansches besteht nicht die Gefahr, daß durch das Aufbringen des Druckes beim Schweißen Teile deformiert werden.

Ferner ist vorzugsweise vorgesehen, daß der Außenrand innenseitig am Deckel vollflächig anliegt, so daß das Zündergehäuse nicht gegenüber dem Generatoraußengehäuse nach außen vorsteht.

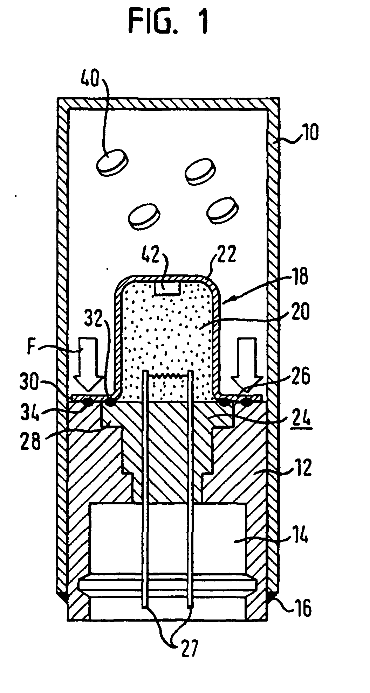

Weitere Merkmale und Vorteile der Erfindung ergeben sich aus der nachfolgenden Beschreibung und aus Figur 1, die einen Längsschnitt durch eine Ausführungsform des erfindungsgemäßen Gasgenerators zeigt.

Der Gasgenerator hat ein Generatoraußengehäuse, bestehend aus einem topfförmigen Teil 10 aus tiefgezogenem Blech und einem Deckel 12 mit einer mehrere Absätze aufweisenden Öffnung 14. Das Generatoraußengehäuse ist gasdicht und feuchtedicht, genauer gesagt sogar heliumdicht, ausgeführt, damit keine Feuchtigkeit in das Innere des Generatoraußengehäuses während mehr als zehn Jahren dringen kann. Hierzu ist das Teil 10 beispielsweise über eine Schweißnaht 16 am Deckel 12 befestigt, wobei zusätzlich auch noch zwischen den beiden Teilen separate Dichtungen vorgesehen sein können.

In die Öffnung 14 ist von innen, das heißt vor dem Aufsetzen des Teiles 10, ein als separat transportierbare Einheit ausgebildeter Zünder 18 eingesetzt. Der Zünder hat ein in sich geschlossenes, eigenes Zündergehäuse, das ebenfalls heliumdicht und feuchtedicht ausgeführt ist. Im Inneren des Zündergehäuses sind pyrotechnisches Material 20 und ein Frühzündsatz 42 untergebracht. Das Zündergehäuse besteht aus einem hutförmigen, das pyrotechnische Material 20 aufnehmenden Aufnahmeteil 22 aus dünnem Blech, zum Beispiel Edelstahl, und einem Sockelteil 24, durch das hindurch elektrische Anschlüsse 27 zum Aktivieren des Zünders geführt sind.

Das Aufnahmeteil 22 hat zum Sockelteil 24 hin einen radial nach außen ragenden, umlaufenden Flansch 26. Das Sockelteil 24 besitzt im Bereich des Flansches 26 einen ebenfalls radial vorstehenden, umlaufenden Gegenflansch 28. Der Gegenflansch 28 hat aber einen geringeren Durchmesser, so daß der Flansch 26 einen Außenrand 30 aufweist, der der Bereich des Flansches sein soll, der gegenüber dem Gegenflansch 28 radial vorsteht.

Wo Flansch 26 und Gegenflansch 28 vollflächig aneinanderanliegen, sind Aufnahmeteil 22 und Sockelteil 24 durch Kondensatorentladungsschweißen gasdicht und vor Feuchteeintritt geschützt miteinander verbunden. Die entsprechende umlaufende Schweißnaht ist mit 32 bezeichnet. Eine zweite Schweißnaht 34 verbindet den Außenrand 30, der unmittelbar am Deckel 12 vollflächig anliegt, mit dem Deckel 12.

Auch die Schweißnaht 34 wird durch Kondensatorentladungsschweißen erzeugt. Durch den übergroßen Flansch 26 dient das Aufnahmeteil 22 nicht nur als Abschnitt des Zündergehäuses, sondern auch als Abdichtung der Öffnung 14 des Generatoraußengehäuses.

Die Herstellung des dargestellten Gasgenerators wird nachfolgend beschrieben.

Der Zünder als separate geschlossene Einheit wird üblicherweise von einem Zulieferer zum Generatorhersteller gebracht und kann, da es sich um ein geschlossenes Gehäuse handelt, auch zwischengelagert werden. Der Zünder wird, in bezug auf Figur 1, von oben auf den Deckel 12 gesetzt und an diesem durch Kondensatorentladungsschweißen bleibend befestigt, wobei beim Kondensatorentladungsschweißen auch ein axialer Druck auf den Flansch 26 ausgeübt wird, wie durch die Pfeile F symbolisiert. Durch diesen Druck wird der Flansch 26 an den Deckel 12 gedrückt.

Parallel hierzu wird in das topfförmige Teil 10 ein pyrotechnischer Treibsatz, zum Beispiel ein tablettenförmiger Treibsatz 40, eingebracht, wobei vorzugsweise die spätere Form des Zünders 18 durch einen sogenannten Dummy ausgespart wird. Anschließend werden Deckel 12 und topfförmiges Teil 10 ineinandergesteckt und aneinandergeschweißt. Eine zusätzliche Dichtung zwischen dem Zünder 18 und dem Deckel 12 kann bei der dargestellten Ausführungsform entfallen.

Folgende Vorteile der Herstellung des Gasgenerators sind zu betonen:
- Eine Kondensatorentladungsschweißung ist ein schneller und kostengünstiger Schweißprozeß, der keine engen Bauteiltoleranzen notwendig macht.
- Es sind wenig Bauteile für den Gasgenerator aufgrund der Anbindung des Zünders am Deckel notwendig.
- Das Kontaktieren und Anpressen des Flansches am Deckel kann in einem Arbeitsgang und in einem Werkzeug erfolgen.
- Die Wärmebelastung der Durchführung der elektrischen Kontakte durch das Sockelteil 24 ist gering. Die möglicherweise vorgesehene Glas-Metall-Durchführung, die zwar nicht gezeigt ist, aber verwendet werden kann, ist damit weniger Spannungen ausgesetzt.
- Die Anbindung des Aufnahmeteils am Generatoraußengehäuse ist großflächig und unmittelbar. Da im Zünder ein Frühzündsatz 42 enthalten ist, der bei einer thermischen Belastung des Generatoraußengehäuses aktiviert wird, hat der erfindungsgemäße Gasgenerator hervorragende Frühzündeigenschaften, denn die Wärme im Generatoraußengehäuse wird schnell und unmittelbar auf das Zündergehäuse und damit auf den Frühzündsatz 42 übertragen.

## Patentansprüche

1. Pyrotechnischer Gasgenerator, mit
einem Generatoraußengehäuse, in dem ein pyrotechnischer Treibsatz (40) und ein Zünder (18) untergebracht sind,
wobei der Zünder (18) ein ein pyrotechnisches Material (20) enthaltendes, in sich geschlossenes, eigenes Zündergehäuse hat, das am Generatoraußengehäuse befestigt ist, und
wobei das Zündergehäuse ein Sockelteil (24) und ein daran befestigtes, hutförmiges Aufnahmeteil (22) hat, wobei
das Aufnahmeteil (22) einen Flansch (26) mit einem Außenrand (30) aufweist und der Flansch (26) am Sockelteil (24) angeschweißt ist, **dadurch gekennzeichnet, daß** der Flansch (26) ein radialer Flansch ist, wobei der Außenrand (30) radial gegenüber dem Sockelteil (24) vorsteht und am Generatoraußengehäuse angeschweißt ist

2. Gasgenerator nach Anspruch 1, **dadurch gekennzeichnet, daß** das Sockelteil (24) einen radial vorstehenden Gegenflansch (28) aufweist, an dem der Flansch (26) des Aufnahmeteils (22) angeschweißt ist.

3. Gasgenerator nach Anspruch 1 oder 2, **dadurch gekennzeichnet, daß** die Verschweißung von Außenrand (30) und Generatoraußengehäuse gasdicht und feuchtedicht ausgeführt ist.

4. Gasgenerator nach einem der vorhergehenden Ansprüche, **dadurch gekennzeichnet, daß** der Außenrand (30) durch Kondensatorentladungsschweißen am Generatoraußengehäuse befestigt ist.

5. Gasgenerator nach einem der vorhergehenden Ansprüche, **dadurch gekennzeichnet, daß** das Generatoraußengehäuse ein topfförmiges Teil (10) und einen dieses verschließenden Deckel (12) mit einer Öffnung (14) zur Durchführung von Anschlüssen (27) des Zünders (18) hat, wobei das Aufnahmeteil (22) am Deckel (12) angeschweißt ist und die Öffnung (14) verschließt.

6. Gasgenerator nach Anspruch 5, **dadurch gekennzeichnet, daß** der Außenrand (30) an der Innenseite des Deckels (12) vollflächig anliegt.

7. Gasgenerator nach einem der vorhergehenden Ansprüche, **dadurch gekennzeichnet, daß** der Zünder (18) einen Frühzündsatz (42) hat.

## Claims

1. A pyrotechnic gas generator, comprising
a generator outer housing, in which a pyrotechnic propellant charge (40) and an igniter (18) are accommodated,
the igniter (18) having its own self-contained igniter housing which contains a pyrotechnic material (20) and is fastened to the generator outer housing, and
the igniter housing having a base part (24) and a hat-shaped receiving part (22) fastened thereto,
the receiving part (22) having a flange (26) with an outer edge (30) and the flange (26) being welded to the base part (24),
**characterized in that**
the flange (26) is a radial flange, the outer edge (30) projecting radially with respect to the base part (24) and being welded to the generator outer housing.

2. The gas generator according to Claim 1, **characterized in that** the base part (24) has a radially projecting counter-flange (28) to which the flange (26) of the receiving part (22) is welded.

3. The gas generator according to Claim 1 or 2, **characterized in that** the welding of the outer edge (30) and the generator outer housing is made so as to be gas-tight and moisture-tight.

4. The gas generator according to any of the preceding claims, **characterized in that** the outer edge (30) is fastened to the generator outer housing by capacitor discharge welding.

5. The gas generator according to any of the preceding claims, **characterized in that** the generator outer housing has a cup-shaped part (10) and a cover (12) closing the latter and having an opening (14) for connections (27) of the igniter (18) to be passed through, the receiving part (22) being welded to the cover (12) and closing the opening (14).

6. The gas generator according to Claim 5, **characterized in that** the outer edge (30) lies with its entire surface against the inner face of the cover (12).

7. The gas generator according to any of the preceding claims, **characterized in that** the igniter (18) has an advance ignition charge (42).

## Revendications

1. Générateur de gaz pyrotechnique, comportant
un boîtier extérieur de générateur dans lequel sont logés un combustible (40) pyrotechnique et un allumeur (18),
l'allumeur (18) possédant un propre boîtier d'allumeur fermé sur soi-même et contenant un matériau pyrotechnique (20), qui est fixé sur le boîtier extérieur de générateur, et
le boîtier d'allumeur possédant une partie de socle (24) et une partie de réception (22) en forme de chapeau, fixée sur celle-ci,
la partie de réception (22) présentant une bride (26) avec un bord extérieur (30) et la bride (26) étant soudée sur la partie de socle (24),
**caractérisé en ce que**
la bride (26) est une bride radiale, le bord extérieur (30) faisant saillie radialement par rapport à la partie de socle (24) et étant soudé au boîtier extérieur de générateur.

2. Générateur de gaz selon la revendication 1, **caractérisé en ce que** la partie de socle (24) présente une contre-bride (28) faisant saillie radialement, sur laquelle est soudée la bride (26) de la partie de réception (22).

3. Générateur de gaz selon la revendication 1 ou 2, **caractérisé en ce que** le soudage du bord extérieur (30) et du boîtier extérieur de générateur est réalisé de manière étanche aux gaz et étanche à l'humidité.

4. Générateur de gaz selon l'une des revendications précédentes, **caractérisé en ce que** le bord extérieur (30) est fixé au boîtier extérieur de générateur par soudage à décharge à condensateur.

5. Générateur de gaz selon l'une des revendications précédentes, **caractérisé en ce que** le boîtier extérieur de générateur possède une partie (10) en forme de pot et un couvercle (12) fermant celle-ci, avec une ouverture (14) pour faire passer des raccordements (27) de l'allumeur (18), la partie de réception (22) étant soudée sur le couvercle (12) et fermant l'ouverture (14).

6. Générateur de gaz selon la revendication 5, **caractérisé en ce que** le bord extérieur (30) est en appui avec toute sa surface sur la face intérieure du couvercle (12).

7. Générateur de gaz selon l'une des revendications précédentes, **caractérisé en ce que** l'allumeur (18) possède une composition d'allumage prématuré (42).
